Europäisches Patentamt

European Patent Office

Office européen des brevets

(19)

(11) **EP 1 051 640 B1**

(12) **EUROPÄISCHE PATENTSCHRIFT**

(45) Veröffentlichungstag und Bekanntmachung des Hinweises auf die Patenterteilung:
**26.03.2003  Patentblatt 2003/13**

(51) Int Cl.$^7$: **G01S 17/36**

(86) Internationale Anmeldenummer:
**PCT/DE99/03797**

(21) Anmeldenummer: **99962108.9**

(22) Anmeldetag: **01.12.1999**

(87) Internationale Veröffentlichungsnummer:
**WO 00/033104 (08.06.2000 Gazette 2000/23)**

(54) **VORRICHTUNG ZUR ENTFERNUNGSMESSUNG MITTELS EINES HALBLEITERLASERS IM SICHTBAREN WELLENLÄNGENBEREICH NACH DEM LAUFZEITVERFAHREN**

DEVICE FOR MEASURING DISTANCE USING A SEMICONDUCTOR LASER IN THE VISIBLE WAVELENGTH RANGE ACCORDING TO THE RUNNING TIME METHOD

DISPOSITIF DE TELEMESURE A L'AIDE D'UN LASER A SEMI-CONDUCTEUR DANS LA ZONE VISIBLE DES LONGUEURS D'ONDES D'APRES LE PROCEDE TEMPS DE FONCTIONNEMENT

(84) Benannte Vertragsstaaten:
**DE ES FR GB IT**

(30) Priorität: **01.12.1998  DE 19855296**

(43) Veröffentlichungstag der Anmeldung:
**15.11.2000  Patentblatt 2000/46**

(73) Patentinhaber: **ROBERT BOSCH GMBH**
**70442 Stuttgart (DE)**

(72) Erfinder: **STEINLECHNER, Siegbert**
**D-71229 Leonberg (DE)**

(56) Entgegenhaltungen:
**EP-A- 0 475 326          DE-A- 2 745 553**
**FR-A- 2 209 111          US-A- 5 082 364**

**Beschreibung**

Stand der Technik

Die Erfindung geht aus von einer Vorrichtung zur Entfernungsmessung mittels eines Halbleiterlasers im sichtbaren Wellenlängenbereich nach dem Laufzeitverfahren, wobei die Entfernung zwischen dem Entfernungsmeßgerät und dem angepeilten Objekt aus der Länge der vergangenen Zeit zwischen Aussendung und Empfang eines Lasermodulationssignals als Wert für die Entfernung ermittelt wird, der im Oberbegriff des Anspruchs 1 definierten Gattung.

Es sind verschiedene Entfernungsmeßgeräte bekannt, die mit Lasern arbeiten, beispielsweise als abstandsmessende Systeme im Kraftfahrzeug oder als Füllstandsmesser in Silos. Diese Systeme arbeiten meist mit Infrarot-Puls-Laserdioden hoher Spitzenleistung, bei denen die Pulslaufzeit zum Objekt und zurück gemessen wird.

Aus der gattungsbildenden DE 43 16 348 A1 ist ein tragbarer Laserentfernungsmesser bekannt, der mit sichtbarem Laserlicht arbeitet. Die Entfernung wird im Laufzeitverfahren ermittelt. Dabei wird die Entfernung zwischen dem Entfernungsmeßgerät und dem angepeilten Objekt aus der Länge der vergangenen Zeit zwischen Aussendung und Empfang eines Laserimpulses, der am Objekt reflektiert ist, als Wert für die Entfernung ermittelt. Der Laserstrahl wird mit einem Kollimationsobjektiv zu einem Meßtrahlenbündel gebündelt, es ist eine Schaltungsanordnung zur Modulation der Meßstrahlung, ein Empfangsobjektiv zur Aufnahme und Abbildung des an dem entfernten Objekt reflektierten Meßtrahlenbündels auf eine Empfangseinrichtung und eine Auswerteeinrichtung zur Ermittlung und Anzeige der zum Objekt gemessenen Entfernung vorgesehen. Bei diesem bekannten Gerät erfolgt die Eichung über eine mechanische Umlenkklappe, wodurch als Referenzstrecke ein Lichtweg bekannter Länge entsteht. Die Einkopplung des von der Empfangslinse empfangenen Lichtes in die Photodiode erfolgt über einen Lichtleiter, dessen Eintrittsfläche entsprechend einem Ausführungsbeispiel elektromechanisch dem entfernungsabhängigen Fokus nachgeführt wird. Bei diesem bekannten Entfernungsmeßgerät liegt der Schwerpunkt in der optomechanischen Ausgestaltung bzw. auf der optisch möglichen Einblendung in die Empfangsdiode. Über die Art der Auswertung und das angewandte Auswerteverfahren wird nichts ausgesagt.

In der DE 43 03 804 C2 wird ein Laserentfernungsmeßgerät beschrieben, bei welchem der Laserstrahl nacheinander mit zwei teilerfremden Frequenzen gleicher Größenordnung moduliert wird. Dabei wird ein Objekt mit den mit beiden Modulationsfrequenzen modulierten Senderlichtstrahlen nacheinander vermessen. Die beiden Meßwerte werden in einer Auswerteeinheit zur Ermittlung der Entfernung des Objekts miteinander verglichen. Die Änderung der Modulationsfrequenz erfolgt in Abhängigkeit von der Geschwindigkeit des beobachteten Objekts.

Weiterhin ist ein Laserentfernungsmeßgerät in der DE 44 11 218 C1 beschrieben, wobei die Entfernung auch hier nach dem Laufzeitprinzip ermittelt wird. Der Schwerpunkt dieses Dokuments liegt in der Ausgestaltung der elektrischen Umschaltung zwischen Referenz- und Empfangsdiode, um beide Strahlen möglichst frühzeitig zusammenzuführen und um Driftprobleme zu vermeiden.

Vorteile der Erfindung

Die erfindungsgemäße Vorrichtung zur Entfernungsmessung hat den Vorteil, daß die Entfernungsmessung in zwei Betriebsarten durchgeführt wird. Bei der ersten Betriebsart ergibt sich ein großer Eindeutigkeitsbereich und eine weniger große Auflösung. Bei der zweiten Betriebsart wird eine hohe Auflösung bei einem geringeren Eindeutigkeitsbereich erreicht. Die Kombination beider Betriebsarten gewährleistet somit einen großen Eindeutigkeitsbereich bei hoher Auflösung. Dabei ist der Aufwand für die Modulation und für die Auswertung durch geschickte Parameterwahl gering.

Gemäß der Erfindung wird dies prinzipiell dadurch erreicht, daß die Schaltungsanordnung zur Modulation der Meßstrahlung und die Auswerteeinrichtung auf zwei unterschiedliche Betriebsarten umstellbar sind, wobei in der ersten Betriebsart mit einer ersten Frequenz $f_1/n$ moduliert wird und in der zweiten Betriebsart mit einer zweiten Frequenz $f_1$ moduliert wird, die in einem ganzzahligen Verhältnis n zueinander stehen und daß das reflektierte Signal in der ersten Betriebsart mit einer dritten Frequenz $f_2/n$ und in der zweiten Betriebsart mit einer vierten Frequenz $f_2$ multipliziert werden, bevor sie zur Auswertung in der ersten Betriebsart mit einer ersten Abtastfrequenz $f_{a1}$ und in der zweiten Betriebsart mit einer zweiten Abtastfrequenz $f_{a2}$ abgetastet werden, wobei die erste Abtastfrequenz $f_{a1}$ die Differenz der vierten $f_2$ und der zweiten Frequenz $f_1$ ist und die zweite Abtastfrequenz $f_{a2}$ ein ganzzahliger Bruchteil q der zweiten Frequenz $f_1$ ist.

Durch die in den weiteren Ansprüchen niedergelegten Maßnahmen sind vorteilhafte Weiterbildungen und Ausgestaltungen sowie Verbesserungen der im Anspruch 1 angegebenen Vorrichtung möglich.

Gemäß einer ersten vorteilhaften Weiterbildung der erfindungsgemäßen Vorrichtung ist vorgesehen, daß das durch die Multiplikation in einem analogen Mischer heruntergemischte reflektierte Signal in der ersten Betriebsart in einem ersten Bandpaß mit einer ersten Bandpaß-Mittenfrequenz $\Delta f/n$ und in der zweiten Betriebsart in einem zweiten Bandpaß mit einer zweiten Bandpaß-Mittenfrequenz $\Delta f$ gefiltert wird, wobei die beiden Bandpaß-Mittenfrequenzen in einem ganzzahligen Verhältnis n zueinander stehen.

In weiterer vorteilhafter Ausgestaltung der Erfindung ist ein Analog-/Digital-Wandler vorgesehen, mit dessen Hilfe die Abtastung des heruntergemischten reflektierten Signals vorgenommen wird.

In weiterer Vereinfachung und Erleichterung der Auswertung ist entsprechend einer zweckmäßigen Ausgestaltung und Weiterbildung der Erfindung vorgesehen, daß in der zweiten Betriebsart der Teiler q derart gewählt ist, daß eine Unterabtastung mit der zweiten Abtastfrequenz $f_{a2}$ des heruntergemischten reflektierten und vorzugsweise bandpaßgefilterten Signals mit der zweiten Mittenfrequenz $\Delta f$ erreicht wird, und zwar in der Weise, daß durch Aliasing im Analog-/Digital-Wandler die zweite Mittenfrequenz $\Delta f$ in die zweite Abtastfrequenz geteilt durch die ganze Zahl n $f_{a2}/n$ abgebildet wird, wobei gilt:

| | |
|---|---|
| $f_{a2} = f_1/q$ | zweite Abtastfrequenz |
| $\Delta f = f_1/k$ | Signalfrequenz nach Heruntermischen |
| $f_{a2}/n = \lvert \Delta f - f_{a2} \rvert$ | Frequenz nach Abtastung mit $f_{a2}$. |

In besonders zweckmäßiger und vorteilhafter Ausgestaltung der Erfindung ist zur Auswertung ein Mikroprozessor als Steuerrechner vorgesehen.

In weiterer Ausgestaltung der Erfindung wird in zweckmäßiger Weise die Phasenmessung des reflektierten, heruntergemischten und vorzugsweise bandpaßgefilterten sowie abgetasteten Signals mittels diskreter Fouriertransformation im Steuerrechner durchgeführt.

Entsprechend einer sehr vorteilhaften und zweckmäßigen Ausgestaltung des erfindungsgemäßen Geräts zur Entfernungsmessung ist ein digitaler Mischer vorgesehen, in welchem als Referenzsignal für den Steuerrechner ein Signal erzeugt wird, das die zeitliche Lage des jeweils ersten von n Abtastwerten markiert. Die Auswertung und Abtastung ist dann besonders einfach, wenn für n der Wert Vier genommen wird, da dann nur Additionen und Subtraktionen bei der Fouriertransformation erforderlich sind. Dies ist auch mittels eines einfachen Mikroprozessors als Steuerrechner dann auf zweckmäßige Weise möglich.

Entsprechend einer weiteren Ausgestaltung der Erfindung ist vorgesehen, daß als Empfangseinrichtung eine Photodiode vorgesehen und vom Steuerrechner derart umschaltbar ist, daß sie abwechselnd Strahlung vom Meßobjekt oder über eine Eichstrecke Strahlung vom Meßstrahlenbündel erhält. Zweckmäßig ist es, wenn die Umschaltung elektrisch erfolgt und eine zweite Photodiode vorgesehen ist.

In weiterer zweckmäßiger Ausgestaltung dieser Ausführungsform der Erfindung ist vorgesehen, daß der Steuerrechner die Umschaltung in den Eichmodus automatisch bei jeder Messung vornimmt.

In zweckmäßiger Weise ist vorgesehen, daß die Phasenmessung in der Eichphase ebenfalls mittels diskreter Fouriertransformation im Steuerrechner durchgeführt wird. Dabei wird in einfacher und zweckmäßiger Ausgestaltung im Steuerrechner der in der Eichphase gemessene Phasenwert von dem bei der Messung ermittelten Phasenwert subtrahiert.

In einer besonders vorteilhaften und zweckmäßigen Ausgestaltung der gerätemäßigen Gestaltung der erfindungsgemäßen Vorrichtung ist vorgesehen, daß als Empfangsobjektiv eine Fresnellinse, insbesondere aus Kunststoff, vorgesehen ist und daß in dieser Fresnellinse ein dünnes undurchsichtiges Rohr außerhalb der optischen Achse des Empfangsobjektivs vorgesehen ist, durch welches das kollimierte Meßstrahlenbündel austritt. Durch diese Gestaltung ist sichergestellt, daß kein optisches Übersprechen zwischen Sender und Empfänger auftritt und durch die so entstehende Parallaxe im Nahbereich ein zu starkes Ansteigen des vom Meßobjekt reflektierten Empfangssignals verhindert wird.

Zeichnung

Die Erfindung ist anhand eines in der Zeichnung dargestellten Ausführungsbeispieles in der nachfolgenden Beschreibung näher erläutert. Es zeigen:

Fig. 1    schematisch die optische Anordnung und die wesentlichen Teile des erfindungsgemäß gestalteten Entfernungsmeßgerätes,

Fig. 2    schematisch ein Blockschaltbild mit den wesentlichen Schaltungskomponenten, die beim Betrieb der Vorrichtung zur Entfernungsmessung in der ersten Betriebsart beteiligt sind, und

Fig. 3    schematisch ein Blockschaltbild mit den wesentlichen Schaltungskomponenten, die beim Betrieb der Vorrichtung zur Entfernungsmessung in der zweiten Betriebsrat beteiligt sind.

Beschreibung des Ausführungsbeispieles

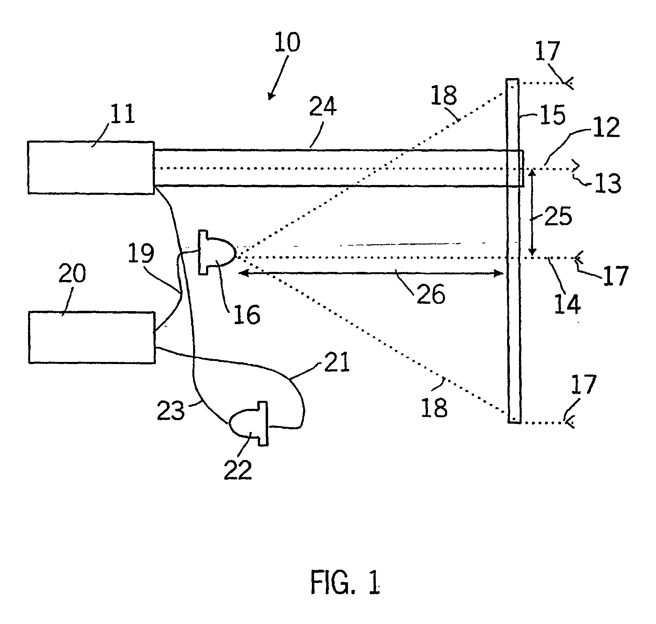

In Fig. 1 sind schematisch die optische Anordnung und die wesentlichen Teile des erfindungsgemäß gestalteten Meßgerätes 10 dargestellt. Als wesentliche Teile enthält das Entfernungsmeßgerät 10 einen Laser mit Kollimator 11, der ein Meßstrahlenbündel 12 in Richtung des Pfeiles 13 auf ein anzupeilendes Objekt, das in der Fig. 1 nicht dargestellt ist, ausstrahlt. Das vom Objekt reflektierte Meßstrahlenbündel 14 wird durch eine Linse 15 auf eine Photodiode 16 abgebildet. Linse 15 und Photodiode 16 dienen als Empfangseinrichtung für die in Richtung der Pfeile 17 einfallenden Strahlung. Diese Strahlung ist durch die Randstrahlen 17 außerhalb der Linse und im Bereich zwischen Linse (15) und Photodiode 16 durch die Randstrahlen 18 dargestellt, wobei die Photodiode 16 mit ihrer lichtempfindlichen Anordnung in der Nähe des Brennpunktes der Linse 15 angeordnet ist. Das von der Photodiode 16 empfangene Signal wird über eine Leitung 19 auf eine Auswerteinrichtung 20 geleitet ebenso wie über eine Leitung 21 ein Eichsignal über eine Referenz-Photodiode 22 eingegeben wird. Die Referenz-Photodiode 22 wird über eine Eichstrecke 23, die aus einem Stück Kunststoff- oder Glasfaser besteht, mit einem Teil des Meßstrahlenbündels 12 belichtet. Ein wesentliches Merkmal der optischen Anordnung ist, daß das vom Laser mit Kollimator 11 erzeugte Meßstrahlenbündel 12 durch ein undurchsichtiges Rohr 24 geführt wird, wobei das Ende des Rohres 24 durch die Linse 15 hindurch ragt. Dabei ist das Rohr 24 mit seiner Längsachse parallel zur optischen Achse 14, auf der der Mittenstrahl des reflektierten Signals einfällt, um einen Abstand 25 verschoben. Die Photodiode 16 ist im Abstand 26 von der Linse 15 entfernt angeordnet. Durch das undurchsichtige Rohr 24 wird optisches Übersprechen zwischen dem Sender, dargestellt durch den Laser mit Kollimator 11, und dem Empfänger, dargestellt durch die Photodiode 16 und die Auswertvorrichtung 20, verhindert. Außerdem wird durch die so entstandene Parallaxe im Nahbereich ein zu starkes Ansteigen des Empfangssignals, dargestellt durch das vom Objekt reflektierte Meßstrahlenbündel, verhindert. Die Linse 15 ist vorzugsweise eine Fresnellinse, die bevorzugt aus Kunststoff gefertigt ist. In Fig. 1 ist sie lediglich schematisch dargestellt.

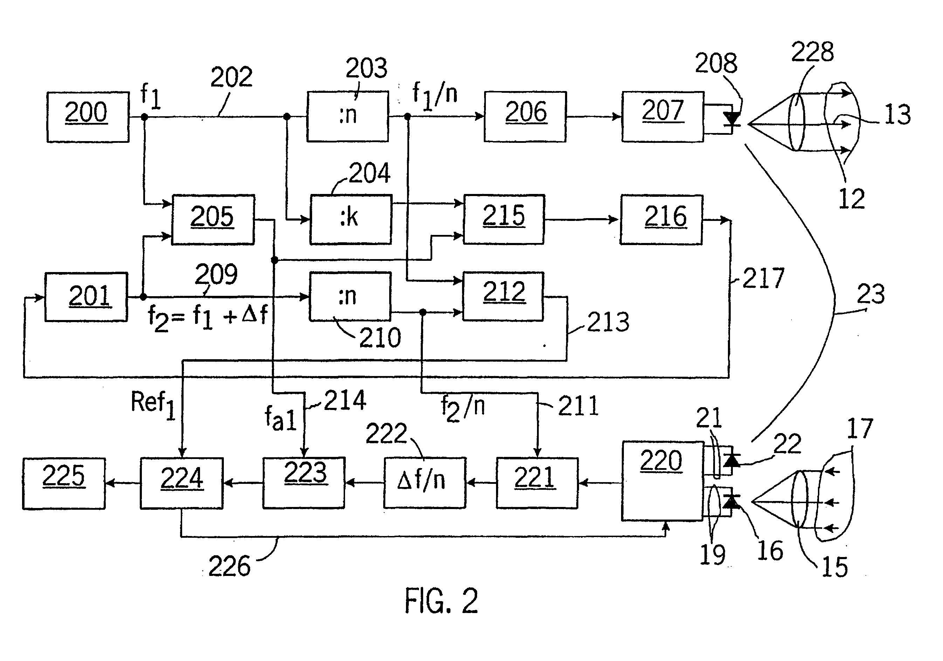

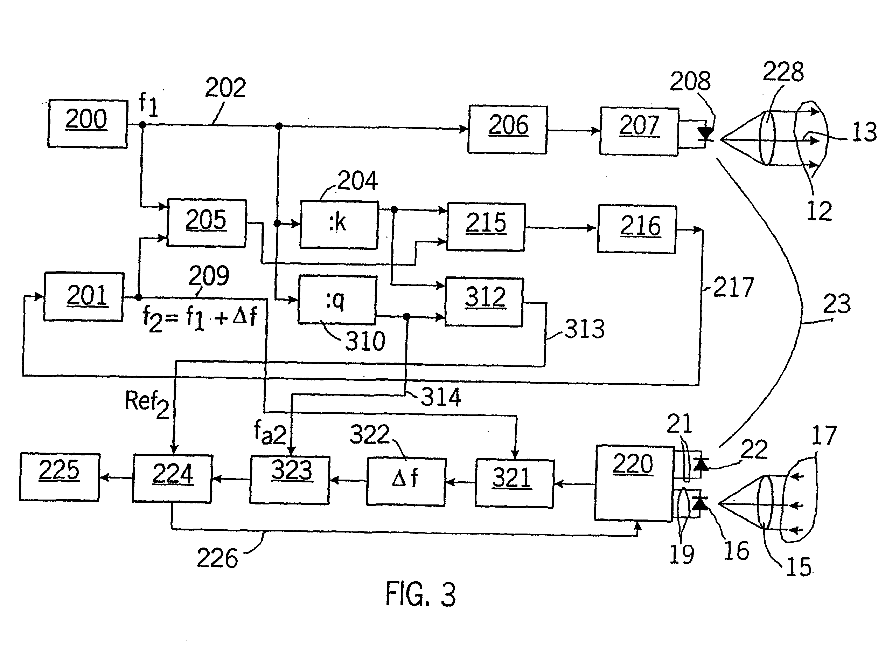

In den Figuren 2 und 3 sind schematisch Blockschaltbilder dargestellt mit den wesentlichen Schaltungskomponenten, die beim Betrieb der Vorrichtung zur Entfernungsmessung in der ersten sowie in der zweiten Betriebsart beteiligt sind. Dabei sind gleiche Schaltungskomponenten, die in beiden Betriebsarten Anwendung finden, mit gleichen Bezugszeichen versehen.

In der Anordnung für die erste Betriebsart ist ein Oszillator 200 vorgesehen, der auf seiner Ausgangsleitung 202 eine Frequenz $f_1$ abgibt, die einer Teilerschaltung :n 203 zugeführt wird sowie einer Teilerschaltung :k 204 und einem digitalen Mischer 205. Der Ausgang der Teilerschaltung 203, die Frequenz $f_1/n$ wird einem Pulsformer 206 zugeführt, der einen Laserregler und Modulator 207 beaufschlagt. Von einer Halbleiterlaserdiode 208 wird Strahlung über eine Kollimationslinse 228 abgegeben, die als Meßstrahlenbündel 12 in Richtung der Pfeile 13 auf das anzupeilende Objekt abgestrahlt wird. Ein zweiter Oszillator 201 erzeugt eine Frequenz $f_2 = f_1 + \Delta f$ auf seiner Ausgangsleitung 209. Diese Frequenz $f_2$ wird dem digitalen Mischer 205 und einer Teilerschaltung :n 210 zugeführt. Das Ausgangssignal des digitalen Mischers 205 wird auf Leitung 214 einem Phasenkomparator 215 zugeführt, dessen zweiter Eingang der Ausgang der Teilerschaltung :k 204 ist. Das Ausgangssignal des Phasenkomparators 205 wird über einen Tiefpaß 216 und dessen Ausgangsleitung 217 als Eingangssignal dem Oszillator 201 zugeführt. Dieser Oszillator 201 ist vorzugsweise als spannungsgesteuerter Oszillator ausgebildet.

Das vom angepeilten Objekt reflektierte Meßstrahlenbündel 17, das nachfolgend als Eingangssignal 17 bezeichnet wird, wird über die Linse 15 auf die Photodiode 16 fokussiert. Diese Empfangsphotodiode 16 ist über Leitung 19 mit einer Photoempfängerschaltung 220 verbunden. Gleichfalls mit dieser Photoempfängerschaltung 220 verbunden ist über Leitung 21 die Referenz-Photodiode 22, die über Leitung 23 einen Teil des Meßstrahlenbündels von der Halbleiterlaserdiode 208 empfängt. Das Ausgangssignal der Photoempfängerschaltung 220 wird einem analogen Mischer 221 zugeführt, der als zweiten Eingang die Ausgangsleitung 211 der Teilerschaltung :n 210 erhält, somit die Frequenz $f_2/n$. Mit dieser Frequenz wird die Empfangsfrequenz heruntergemischt. Das heruntergemischte Signal wird als Ausgang des analogen Mischers 221 über ein Bandpaß 222 mit der Bandpaß-Mittenfrequenz $\Delta f/n$ bandpaßgefiltert und weiterhin einem Analog-/Digital-Wandler 223 zugeführt. Dort wird das so behandelte Empfangssignal mit einer auf Leitung 214 zugeführten Abtastfrequenz $f_{a1}$ abgetastet, die vom digitalen Mischer 205 zugeführt wird. Dieses Signal wird in einem Steuerrechner 224, der vorzugsweise ein Mikroprozessor ist, verarbeitet. Zur Verarbeitung dient ein Referenzsignal Ref1, welches auf Leitung 213 vom digitalen Mischer 212 zugeführt wird. Das Ausgangssignal des Steuerrechners 224 wird auf einer Anzeige 225 sichtbar gemacht. Vom Steuerrechner 224 aus wird die Photoemfängerschaltung 220 über eine Leitung 226 geschaltet, und zwar derart, daß entweder das Eichsignal von der Referenz-Photodiode 22 oder das Meßsignal von der Empfangsdiode 16 auf die Verarbeitungsstrecke gebracht wird.

Bei der zweiten Betriebsart sind in den meisten Fällen dieselben Schaltungskomponenten wie bei der ersten Betriebsart entsprechend der Darstellung in Fig. 2 beteiligt. Abweichend von der ersten Betriebsart und der Darstellung in Fig. 2 wird dem Pulsforrrier 206 auf Leitung 202 die Frequenz $f_1$ vom Oszillator 200 direkt zur Modulation zugeführt. Als Referenzsignal Ref2 erhält der Steuerrechner 224 auf Leitung 313 von einem digitalen Mischer 312 ein Referenzsignal. Dem Mischer 312 wird als Eingangsignal zum einen auf Leitung 314 das Ausgangssignal der Teilerschaltung :q 310 und zum anderen das Ausgangssignal der Teilerschaltung :k 204 zugeführt. Das Ausgangssignal auf Leitung 314 der Teilerschaltung :q 310 ist die Abtastfrequenz $f_{a2}$, die dem Analog-/Digital-Wandler 323 zur Abtastung zugeführt wird. Die Heruntermischung des durch die Photoempfängerschaltung 220 verstärkten Eingangssignals erfolgt in einem analogen Mischer 321, dem als Mischfrequenz die Frequenz $f_2 = f_1 + \Delta f$ auf Leitung 209 zugeführt wird. Dieses heruntergemischte Signal wird über ein Bandpaßfilter 322 mit der Bandpaß-Mittenfrequenz $\Delta f$ gefiltert.

Es sei hier angemerkt, daß in der praktischen Ausführung auch die Analog-/Digital-Wandler 223 und 323 sowie die analogen Mischer 221 und 321 jeweils durch nur eine Schaltungskomponente realisiert werden.

Die in den Figuren 2 und 3 dargestellte Schaltungsanordnung zur Modulation der Meßstrahlung und zur Auswertung des Eingangssignals sieht vor, daß sie auf zwei unterschiedliche Betriebsarten umstellbar ist. In der ersten Betriebsart wird mit einer ersten Frequenz $f_1/n$ über Pulsformer 206 der Laserregler und Modulator 207 moduliert und in der zweiten Betriebsart wird mit einer zweiten Frequenz $f_1$ moduliert. Diese beiden Frequenzen stehen in einem ganzzahligen Verhältnis n zueinander. Das reflektierte Signal 17 wird in der ersten Betriebsart mit einer dritten Frequenz $f_2/n$ und in der zweiten Betriebsart mit einer vierten Frequenz $f_2$ multipliziert, bevor es zur Auswertung in der ersten Betriebsart mit einer ersten Abtastfrequenz $f_{a1}$ und in der zweiten Betriebsart mit einer zweiten Abtastfrequenz $f_{a2}$ abgetastet wird. Dabei ist die erste Abtastfrequenz $f_{a1}$ die Differenz der vierten Frequenz $f_2$ und der zweiten Frequenz $f_1$, nämlich $\Delta f$, und die zweite Abtastfrequenz $f_{a2}$ ist ein ganzzahliger Bruchteil q der zweiten Frequenz $f_1$, nämlich $f_1/q$. Die Abtastung mit den beiden unterschiedlichen Abtastfrequenzen $f_{a1}$ und $f_{a2}$ erfolgt im Analog-/Digital-Wandler 223 bei der ersten und 323 bei der zweiten Betriebsart.

Das Eingangssignal, welches von der Photoempfängerschaltung 220 verstärkt ist, wird in der ersten Betriebsart in dem analogen Mischer 221 mit der Frequenz $f_2/n$ multiplikativ heruntergemischt und mittels des Bandpasses 222 mit der Bandpaß-Mittenfrequenz $\Delta f/n$ gefiltert. In der zweiten Betriebsart erfolgt die Heruntermischung bekanntlich mit der Frequenz $f_2$ und der Bandpaß 322 für die zweite Betriebsart weist die Bandpaß-Mittenfrequenz $\Delta f$ auf. Somit stehen in vorteilhafter Weise die beiden Bandpaß-Mittenfrequenzen in einem ganzzahligen Verhältnis n zueinander.

Nachfolgend wird die Arbeitsweise der erfindungsgemäßen Vorrichtung erläutert:

Es wird ein Halbleiterlaser, in Form einer Halbleiterlaserdiode 208 verwendet, der im sichtbaren Wellenlängenbereich strahlt. Die mittlere Laserleistung, die unter 1 mW in der Laserklasse 2 liegt, wird durch die Regel- und Modulationsschaltung 207 konstant gehalten. Der Laserstrahl wird durch den Kollimator 228 gebündelt. Die Modulation erfolgt durch den Pulsformer 206 mit kurzen Rechteckimpulsen mit der Wiederholfrequenz $f_1$ bzw. $f_1/n$. Die Vorrichtung ist mit zwei Betriebsarten ausgestattet, in der ersten Betriebsart erfolgt die Modulation mit der Frequenz $f_1/n$ zur Grobmessung des Abstandes zum angepeilten Objekt, in der zweiten Betriebsart erfolgt die Modulation mit der Frequenz $f_1$ zur Feinmessung des Abstandes.

Die Frequenz $f_1$ wird im Oszillator 200 erzeugt. Der Oszillator 201 erzeugt Mischersignale zur Heruntermischung der Empfangsfrequenz. Es erfolgt eine Regelung der Frequenz $f_2$ des Oszillators 201 über eine phasengeregelte Schleife (PLL Phase-Locked-Loop) in der Weise, daß die Frequenz $f_2$ gleich der ersten Frequenz $f_1$ plus einer Differenzfrequenz $\Delta f$ ist, wobei die Differenzfrequenz $\Delta f$ ein ganzzahliger Quotient der Frequenz des Oszillators 200 ist, nämlich $\Delta f = f_1/k$, wobei k eine ganze Zahl ist. Zu dieser Regelung dient der digitale Mischer 205, die Teilerschaltung : k 204, der Phasenkomparator 215, der nachgeschaltete Tiefpaß 216 und der als spannungsgesteuerter Oszillator ausgebildete Oszillator 201.

Zur Auswertung erfolgt eine Multiplikation des in der Photoempfängerschaltung 220 vorverstärkten Empfangssignals mit der Frequenz $f_2/n$ in der ersten Betriebsart bzw. mit der Frequenz $f_2$ in der zweiten Betriebsart, wobei n eine ganze Zahl ist und die Multiplikation in dem analogen Mischer 221 bzw. 321 erfolgt. Anschließend erfolgt eine Bandpaßfilterung des heruntergemischten Empfangssignals mit der Bandpaß-Mittenfrequenz $\Delta f/n$ in der ersten Betriebsart bzw. der Bandpaß-Mittenfrequenz $\Delta f$ in der zweiten Betriebsart. Daraufhin wird in der ersten Betriebsart in dem Analog-/Digital-Wandler 223 mit der Abtastrate bzw. Abtastfrequenz $f_{a1} = \Delta f$ bzw. im Analog-/Digital-Wandler 323 mit der Abtastrate bzw. Abtastfrequenz $f_{a2} = f_1/q$, wobei q eine ganze Zahl ist, abgetastet.

In der zweiten Betriebsart ist der Teiler q derart gewählt, daß eine Unterabtastung mit der zweiten Frequenz $f_{a2}$ des heruntergemischten reflektierten und vorzugsweise bandpaßgefilterten Eingangssignals mit der zweiten Bandpaß-Mittenfrequenz $\Delta f$ erreicht wird, und zwar in der Weise, daß durch Aliasing im Analog-/Digital-Wandler 323 die zweite Bandpaß-Mittenfrequenz $\Delta f$ in die Frequenz $f_{a2}/n$ abgebildet wird, wobei gilt:

| | |
|---|---|
| $f_{a2} = f_1/q$ | zweite Abtastfrequenz |
| $\Delta f = f_1/k$ | Signalfrequenz nach Heruntermischen |
| $f_{a2}/n = |\Delta f - f_{a2}|$ | Frequenz nach Abtastung mit $f_{a2}$ |

In einer praktisch verwirklichten Vorrichtung entsprechend der Erfindung, die als ein "elektronisches Maßband" für den Heimwerkergebrauch vorgesehen ist, welche berührungslos den Abstand zwischen dem Entfernungsmeßgrät und dem angepeilten Meßpunkt, beispielsweise auf einer Wand oder einer Zimmerdecke, mißt, wurden folgende Werte gewählt:

| | |
|---|---|
| $f_1 = 40665{,}000$ kHz | Frequenz des Oszillators 200 |
| $k = 4096$ | Teilfaktor |
| $\Delta f = 40674{,}928$ kHz | Frequenzunterschied Osz.200 - Osz. 201 |
| $f_2 = 40674{,}928$ kHz | Frequenz des Oszillators 201 |
| $n = 4$ | Teilfaktor |
| $q = 5120$ | Teilfaktor |

Erste Betriebsart:

| | |
|---|---|
| $f_1/n = 10166{,}250$ kHz | Sendefrequenz |
| $f_2/n = 10168{,}732$ kHz | Mischerfrequenz |
| $\Delta f/n = 2482$ Hz | Signalfrequenz nach Heruntermischen |
| $f_{a1} = \Delta f = 9928$ Hz | Abtastfrequenz |
| $x_{max} = c{*}n/(2{*}f_1) = 14{,}75$ m | Eindeutigkeitsbereich, wobei x die Entfernung und c die Lichtgeschwindigkeit bedeuten |

Zweite Betriebsart:

| | |
|---|---|
| $f_1 = 40665{,}000$ kHz | Sendefrequenz |
| $f_2 = 40674{,}928$ kHz | Mischerfrequenz |
| $\Delta f = 9928$ Hz | Signalfrequenz nach Heruntermischen |
| $f_{a2} = f_1/q = 7942$ Hz | Abtastfrequenz |
| $f_{a2}/n = \Delta f - f_{a2} = 1986$ Hz | Signalfrequenz nach Abtastung |
| $x_{max} = c/(2{*}f_1) = 3{,}69$ m | Eindeutigkeitsbereich, wobei x die Entfernung und c die Lichtgeschwindigkeit bedeuten. |

Die Auswertung des bandpaßgefilterten und abgetasteten Empfangssignals erfolgt in dem vorzugsweise als Mikroprozessor gestalteten Steuerrechner 224 dadurch, daß die Phasenmessung des Empfangssignals durch diskrete Fouriertransformation erfolgt. Jeweils n Abtastwerte am Ausgang des Analog-/Digital-Wandlers 223 bzw. 323 beschreiben eine Sinusperiode. Das Signal Ref1 bzw. Ref2, welches von dem digitalen Mischer 212 bzw. 312 generiert wird, kennzeichnet den jeweils ersten Wert der n Abtastwerte und dient damit als Referenzphase in der ersten bzw. zweiten Betriebsart.

Die Berechnung der diskreten Fouriertransformation ist insbesondere im dargestellten Fall, bei dem n = 4 ist, besonders einfach. Wenn $x_i$ (i = 0, 1, 2 ...) die Abtastwerte sind, so gilt für die Phase $\Phi$ der Frequenzlinie mit der Frequenz $f_a/4$:

$$Re = x0 - x2 + x4 - x6 + .. - ..$$

$$Im = -x1 + x3 - x5 + x7 - .. + ..$$

$$\Phi = arc\,(Re + j{*}Im)$$

Es sind somit für die diskrete Fouriertransformation also nur Additionen und Subtraktionen durchzuführen.

Die Photoempfängerschaltung 220 ist über Leitung 226 vom Steuerrechner 224 so umschaltbar, daß er wahlweise Licht vom Meßobjekt über die Empfangsdiode 16 oder von der Eichstrecke über die Referenz-Photodiode 22 empfängt. Die Eichstrecke besteht aus einem Stück Kunststoff- oder Glasfaser 23, in welche ein geringer Teil der Sendeleistung der Halbleiterlaserdiode 208 eingestrahlt wird. Die Umschaltung erfolgt elektrisch, wobei eine zweite Photodiode verwendet wird. Automatisch bei jeder Messung wird die Umschaltung in den Eichmodus vorgenommen. In der Eichphase werden die Werte ebenfalls durch diskrete Fouriertransformation gemessen und von der Phase des Empfangssignals abgezogen. Dadurch werden Laufzeitdriften der verwendeten Schaltungen eliminiert.

In vorteilhafter Weise erlaubt die Kombination der beiden Betriebsarten, die durch die Erfindung vorgesehen sind, einen großen Eindeutigkeitsbereich bei hoher Auflösung. Dies beruht darauf, daß in der ersten Betriebsart ein großer Eindeutigkeitsbereich und eine weniger große Auflösung und in der zweiten Betriebsart eine hohe Auflösung bei kleinerem Eindeutigkeitsbereich miteinander kombiniert werden. Alle für die Abstandsmessung benötigten Frequenzen werden aus der Frequenz $f_1$ des als Quarzoszillator gestalteten Oszillators 200 abgeleitet.

Auch der Oszillator 201 kann als Quarzoszillator ausgelegt werden und über eine Kapazitätsdiode auf Sollfrequenz geregelt werden. In vorteilhafter Weise werden durch eine umschaltbare Eichstrecke Driften und Toleranzen der beteiligten Bauelemente eliminiert.

Die Erfindung gestattet dadurch, daß in beiden Betriebsarten Abtastfrequenz und Signalfrequenz nach der Abtastung im Verhältnis n:1, wobei n als ganze Zahl und vorzugsweise als n = 4 gewählt ist, zueinander stehen, was die Auswertung der Signale sehr vereinfacht. In der zweiten Betriebsart wird der Aliasing-Effekt dazu ausgenutzt, um das Verhältnis n:1 zwischen Abtastfrequenz und Signalfrequenz herzustellen.

Durch die Anwendung der diskreten Fouriertransformation wird eine genaue Phasenmessung auch bei rauschbehafteten Signalen ermöglicht. Diese diskrete Fouriertransformation ist besonders einfach bei der Wahl n = 4. In diesem Fall sind bei der diskreten Fouriertransformation keine Multiplikationen, sondern nur Additionen und Subtraktionen notwendig. Damit ist diese diskrete Fouriertransformationsberechnung auch auf einfachen, langsamen Mikroprozessoren in Echtzeit durchzuführen. Die Berechnung der Phase aus dem Ergebnis der diskreten Fouriertransformation, nämlich $\Phi$ = arc (Re + j*Im), führt auf eine Arcus-Tangens-Berechnung, die jedoch nur einmal am Schluß der Messung durchzuführen ist. Dabei sind beispielsweise Tabellenverfahren, CORDIC-Algorithmen oder Potenzreihenansätze einsetzbar. - Die in Fig. 1 gezeigte besondere optische Anordnung verhindert optisches Übersprechen und übermäßiges Ansteigen der Signalamplitude im Nahbereich.

**Patentansprüche**

1. Vorrichtung zur Entfernungsmessung mittels eines Halbleiterlasers (11, 208) im sichtbaren Wellenlängenbereich nach dem Laufzeitverfahren, wobei die Entfernung zwischen dem Entfernungsmeßgerät (10) und dem angepeilten Objekt aus der Länge der vergangenen Zeit zwischen Aussendung und Empfang eines Lasermodulationssignals als Wert für die Entfernung ermittelt wird, mit einem Kollimationsobjektiv (228) zur Bündelung des ausgesandten Meßstrahlenbündels (12), einer Schaltungsanordnung zur Modulation dsr Meßstrahlung, einem Empfangsobjektiv (15) zur Aufnahme und Abbildung des an dem entfernten Objekt reflektierten Meßstrahlenbündels (17) auf eine Empfangseinrichtung (16) und einer Auswerteeinrichtung (20) zur Ermittlung und Anzeige der zum Objekt gemessenen Entfernung, **dadurch gekennzeichnet, daß** die Schaltungsanordnung zur Modulation der Meßstrahlung und die Auswerteeinrichtung auf zwei unterschiedliche Betriebsarten umstellbar sind, wobei in der ersten Betriebsart mit einer ersten Frequenz ($f_1$/n) moduliert wird und in der zweiten Betriebsart mit einer zweiten Frequenz ($f_1$) moduliert wird, die in einem ganzzahligen Verhältnis n zueinander stehen, und daß das reflektierte Signal in der ersten Betriebsart mit einer dritten Frequenz ($f_2$/n) und in der zweiten Betriebsart mit einer vierten Frequenz ($f_2$) multipliziert werden, bevor sie zur Auswertung in der ersten Betriebsart mit einer ersten Abtastfrequenz ($f_{a1}$) und in der zweiten Betriebsart mit einer zweiten Abtastfrequenz ($f_{a2}$) abgetastet werden, wobei die erste Abtastfrequenz ($f_{a1}$) die Differenz der vierten ($f_2$) und der zweiten Frequenz ($f_1$) ist und die zweite Abtastfrequenz ($f_{a2}$) ein ganzzahliger Bruchteil (:q) der zweiten Frequenz ($f_1$) ist.

2. Vorrichtung nach Anspruch 1, **dadurch gekennzeichnet, daß** das durch die Multiplikation in einem analogen Mischer (221, 321) heruntergemischte reflektierte Signal in der ersten Betriebsart in einem ersten Bandpaß (222) mit einer ersten Bandpaß-Mittenfrequenz ($\Delta$f/n) und in der zweiten Betriebsart in einem zweiten Bandpaß (322) mit einer zweiten Bandpaß-Mittenfrequenz ($\Delta$f) gefiltert wird, wobei die beiden Bandpaß-Mittenfrequenzen in einem ganzzahligen Verhältnis n zueinander stehen.

3. Vorrichtung nach Anspruch 1 oder 2, **dadurch gekennzeichnet, daß** ein Analog-/Digital-Wandler (223, 323) vorgesehen ist, mit dessen Hilfe die Abtastung des heruntergemischten reflektierten Signals vorgenommen wird.

4. Vorrichtung nach Anspruch 1, 2 oder 3, **dadurch gekennzeichnet, daß** in der zweiten Betriebsart der Teiler (:q) derart gewählt ist, daß eine Unterabtastung mit der zweiten Abtastfrequenz ($f_{a2}$) des heruntergemischten reflektierten und vorzugsweise bandpaßgefilterten Signals mit der zweiten Bandpaß-Mittenfrequenz ($\Delta$f) erreicht wird, und zwar in der Weise, daß durch Aliasing im Analog-/Digital-Wandler die zweite Bandpaß-Mittenfrequenz ($\Delta$f) in

die zweite Abtastfrequenz geteilt durch die ganze Zahl n ($f_{a2}/n$) abgebildet wird, wobei gilt:

| | |
|---|---|
| $f_{a2} = f_1/q$ | zweite Abtastfrequenz |
| $\Delta f = f_1/k$ | Signalfrequenz nach Heruntermischen |
| $f_{a2}/n = |\Delta f - f_{a2}|$ | Frequenz nach Abtastung mit $f_{a2}$ |

**5.** Vorrichtung nach einem der vorigen Ansprüche, **dadurch gekennzeichnet, daß** zur Auswertung ein Mikroprozessor als Steuerrechner (224) vorgesehen ist.

**6.** Vorrichtung nach Anspruch 5 einem der Ansprüche 1 bis 4, **dadurch gekennzeichnet, daß** die Phasenmessung des reflektierten, heruntergemischten, und vorzugsweise bandpaßgefilterten sowie abgetasteten Signals mittels diskreter Fouriertransformation im Steuerrechner (224) durchgeführt wird.

**7.** Vorrichtung nach Anspruch 6, **dadurch gekennzeichnet, daß** ein digitaler Mischer (212, 312) vorgesehen ist, in welchem als Referenzsignal (Ref1, Ref2) für den Steuerrechner (224) ein Signal erzeugt wird, das die zeitliche Lage des jeweils ersten von n Abtastwerten markiert.

**8.** Vorrichtung nach einem der vorigen Ansprüche, **dadurch gekennzeichnet, daß** als Empfangseinrichtung eine Photodiode (16, 22, 220) vorgesehen und vom Steuerrechner (224) derart umschaltbar (226) ist, daß sie abwechselnd Strahlung (17) vom Meßobjekt oder über eine Eichstrecke (23) Strahlung vom Meßstrahlenbündel (12) erhält.

**9.** Vorrichtung nach Anspruch 8, **dadurch gekennzeichnet, daß** die Umschaltung elektrisch erfolgt und eine zweite Photodiode (22) vorgesehen ist.

**10.** Vorrichtung nach einem der Ansprüche 8 oder 9, **dadurch gekennzeichnet, daß** der Steuerrechner (224) die Umschaltung in den Eichmodus automatisch bei jeder Messung vornimmt.

**11.** Vorrichtung nach einem der Ansprüche 8 bis 10, **dadurch gekennzeichnet, daß** die Phasenmessung in der Eichphase mittels diskreter Fouriertransformation im Steuerrechner (224) durchgeführt wird.

**12.** Vorrichtung nach einem der Ansprüche 8 bis 11, **dadurch gekennzeichnet, daß** im Steuerrechner (224) der in der Eichphase gemessene Phasenwert von dem bei der Messung ermittelten Phasenwert subtrahiert wird.

**13.** Vorrichtung nach einem der vorigen Ansprüche, **dadurch gekennzeichnet, daß** als Empfangsobjektiv eine Fresnellinse (15), insbesondere aus Kunststoff, vorgesehen ist und daß in dieser Fresnellinse (15) ein dünnes undurchsichtiges Rohr (24) außerhalb der optischen Achse (14) des Empfangsobjektivs vorgesehen ist, durch welches das kollimierte Meßstrahlenbündel (12) austritt.

**Claims**

**1.** Device for measuring distance by means of a semiconductor laser (11, 208) in the visible wavelength region using the run-time method, the distance between the distance-measuring instrument (10) and the object whose direction is to be found is determined as value for the distance from the length of the elapsed time between emission and reception of a laser modulation signal, having a collimation lens (228) for focusing the emitted measuring beam (12), a circuit arrangement for modulating the measuring radiation, a receiving lens for picking up and projecting the measuring beam (17), reflected at the remote object, on to a receiving device (16), and an evaluation device (20) for determining and displaying the distance measured to the object, **characterized in that** the circuit arrangement for modulating the measuring radiation and the evaluation device can be changed over to two different operating modes, modulation being carried out with the aid of a first frequency ($f_1/n$) in the first operating mode and with the aid of a second frequency ($f_1$) in the second operating mode, which frequencies have an integral ratio n to one another, and **in that** the reflected signal is multiplied by a third frequency ($f_2/n$) in the first operating mode and by a fourth frequency ($f_2$) in the second operating mode before they are sampled for the purpose of evaluation at a first sampling frequency ($f_{a1}$) in the first operating mode and at a second sampling frequency ($f_{a2}$) in the second operating mode, the first sampling frequency ($f_{a1}$) being the difference between the fourth frequency ($f_2$) and the second one ($f_1$) and the second sampling frequency ($f_{a2}$) being an integral fraction (:q) of the second frequency ($f_1$).

2. Device according to Claim 1, **characterized in that** the reflected signal mixed downward by the multiplication in an analogue mixer (221, 321) is filtered in the first operating mode in a first bandpass filter (222) with a first bandpass mid-frequency ($\Delta f/n$) and is filtered in the second operating mode in a second bandpass filter (322) with a second bandpass mid-frequency ($\Delta f$), the two bandpass mid-frequencies having an integral ratio n to one another.

3. Device according to Claim 1 or 2, **characterized in that** an analogue-to-digital converter (223, 323) is provided with the aid of which the sampling of the downward-mixed reflected signal is undertaken.

4. Device according to Claim 1, 2 or 3, **characterized in that** in the second operating mode the divisor (:q) is selected in such a way that an undersampling at the second sampling frequency ($f_{a2}$) of the downward-mixed reflected and preferably bandpass-filtered signal is achieved at the second bandpass mid-frequency ($\Delta f$), and specifically in such a way that the second bandpass mid-frequency ($\Delta f$) is mapped by aliasing in the analogue-to-digital converter into the second sampling frequency divided by the whole number n ($f_{a2}/n$), in which case it holds that:

| | |
|---|---|
| $f_{a2} = f_1/q$ | second sampling frequency |
| $\Delta f = f_1/k$ | signal frequency after downward mixing |
| $f_{a2}/n = \lvert \Delta f - f_{a2} \rvert$ | frequency after sampling at $f_{a2}$ |

5. Device according to one of the preceding claims, **characterized in that** a microprocessor is provided as control computer (224) for the purpose of evaluation.

6. Device according to Claim 5 and one of Claims 1 to 4, **characterized in that** the phase measurement of the reflected, downward-mixed and preferably bandpass-filtered as well as sampled signal is carried out by means of discrete Fourier transformation in the control computer (224).

7. Device according to Claim 6, **characterized in that** a digital mixer (212, 312) is provided in which there is generated as reference signal (Ref1, Ref2) for the control computer (224) a signal which marks the temporal position of the respective first of n samples.

8. Device according to one of the preceding claims, **characterized in that** a photodiode (16, 22, 220) is provided as receiving device and can be switched over (226) by the control computer (224) in such a way that it alternately receives radiation (17) from the measurement object or, via a calibration section (23), radiation from the measuring beam (12).

9. Device according to Claim 8, **characterized in that** the switchover is performed electrically and a second photodiode (22) is provided.

10. Device according to one of Claims 8 or 9, **characterized in that** the control computer (224) undertakes the switchover into the calibration mode automatically with each measurement.

11. Device according to one of Claims 8 to 10, **characterized in that** the phase measurement in the calibration phase is carried out by means of discrete Fourier transformation in the control computer (224).

12. Device according to one of Claims 8 to 11, **characterized in that** the phase value measured in the calibration phase is subtracted in the control computer (224) from the phase value determined during measurement.

13. Device according to one of the preceding claims, **characterized in that** a Fresnel lens (15), in particular made from plastic, is provided as receiving lens, and **in that** there is provided in this Fresnel lens (15) a thin opaque tube (24) outside the optical axis (14) of the receiving lens, through which the collimated measuring beam (12) emerges.

**Revendications**

1. Dispositif de télémétrie à l'aide d'un laser à semi-conducteur (11, 208) dans le domaine des longueurs d'ondes visibles, fonctionnant selon le procédé du temps de parcours, selon lequel on détermine l'éloignement entre l'appareil de télémétrie (10) et l'objet visé à partir de la durée du temps écoulé entre l'émission et la réception d'un signal laser modulé comme valeur de l'éloignement, comprenant un objectif collimateur (228) pour regrouper le faisceau de rayons de mesure émis (12), un circuit pour moduler le rayonnement de mesure, un objectif de réception (15) pour recevoir et donner l'image du faisceau de rayons de mesure (17) réfléchi par l'objet éloigné dans une installation de réception (16) et une installation d'exploitation (20) pour déterminer et afficher l'éloignement mesuré de l'objet,

**caractérisé en ce que**

le circuit de modulation du rayonnement de mesure et l'installation d'exploitation peuvent être commutés sur deux modes de fonctionnement différents, le premier mode de fonctionnement ayant une modulation à une première fréquence ($f_1/n$) et le second mode de fonctionnement ayant une modulation à une seconde fréquence $f_1$, ces deux fréquences étant dans un rapport d'un nombre entier n, et

le signal réfléchi dans le premier mode de fonctionnement est multiplié par une troisième fréquence ($f_2/n$) et dans le second mode de fonctionnement par une quatrième fréquence ($f_2$), avant d'être détecté pour l'exploitation dans le premier mode de fonctionnement avec une première fréquence de détection ($f_{a1}$) et dans le second mode de fonctionnement avec une seconde fréquence de détection ($f_{a2}$),

la première fréquence de détection ($f_{a1}$) étant la différence de la quatrième fréquence ($f_2$) et de la seconde fréquence ($f_1$), et la seconde fréquence de détection ($f_{a2}$) étant une fraction par un nombre entier ( :q) de la seconde fréquence ($f_1$).

2.  Dispositif de télémétrie à l'aide d'un laser à semi-conducteur selon la revendication 1,

    **caractérisé en ce que**

    le signal réfléchi mélangé en réduction par la multiplication dans un mélangeur analogique (221, 321) est filtré dans le premier mode de fonctionnement dans un premier filtre à bande passante (222) avec une première fréquence médiane de bande passante $\Delta f/n$ et dans le second mode de fonctionnement, dans un second filtre à bande passante (322) avec une seconde fréquence médiane de bande passante $\Delta f$, les deux fréquences médianes de bandes passantes étant l'une par rapport à l'autre dans un rapport de nombre entier n.

3.  Dispositif de télémétrie à l'aide d'un laser à semi-conducteur selon les revendications 1 ou 2,

    **caractérisé par**

    un convertisseur analogique/numérique (223, 323) à l'aide duquel on détecte le signal réfléchi mélangé en réduction.

4.  Dispositif de télémétrie à l'aide d'un laser à semi-conducteur selon les revendications 1, 2, 3,

    **caractérisé en ce que**

    dans le second mode de fonctionnement on choisit le diviseur :q pour faire une détection d'échantillonnage réduit à la seconde fréquence de détection $f_{a2}$ du signal réfléchi mélangé avec réduction, et de préférence filtré par un filtre passe bande avec la seconde fréquence médiane $\Delta f$ de bande passante, et cela de façon que par retournement dans le convertisseur analogique/numérique, la seconde fréquence médiane de bande passante $\Delta f$ soit formée dans la seconde fréquence de détection divisée par le nombre entier n ; $f_{a2}/n$ avec

| | |
|---|---|
| $f_{a2} = f_1/q$ | Seconde fréquence de détection |
| $\Delta f = f_1/k$ | Fréquence du signal après mélange en réduction |
| $f_{a2}/n = [\Delta f - f_{a2}]$ | Fréquence après détection par $f_{a2}$ |

5.  Dispositif de télémétrie à l'aide d'un laser à semi-conducteur selon l'une des revendications précédentes,

    **caractérisé en ce que**

    le calculateur de commande (224) qui effectue l'exploitation est un microprocesseur.

6.  Dispositif de télémétrie à l'aide d'un laser à semi-conducteur selon la revendication 5 et l'une des revendications 1 à 4,

    **caractérisé en ce que**

    la mesure de phase du signal réfléchi mélangé en réduction, et de préférence filtré par un filtre passe bande et détecté, est faite à l'aide d'une transformation de Fourier discrète effectuée dans le calculateur de commande (224).

7.  Dispositif de télémétrie à l'aide d'un laser à semi-conducteur selon revendication 6,

    **caractérisé par**

    un mélangeur numérique (212, 312) qui génère comme signal de référence ($Ref_1$, $Ref_2$) du calculateur de commande (224), un signal repérant la position dans le temps de chaque fois la première des n valeurs de détection.

**8.** Dispositif de télémétrie à l'aide d'un laser à semi-conducteur selon l'une des revendications précédentes, **caractérisé en ce que** l'installation de réception est une photodiode (16, 22, 220) commutée par le commutateur de commande (224, 226) de façon à recevoir alternativement le rayonnement (17) venant de l'objet mesuré, et un rayonnement pris sur le faisceau de rayons de mesure (12) transmis par un chemin de tarage (23).

**9.** Dispositif de télémétrie à l'aide d'un laser à semi-conducteur selon la revendication 8, **caractérisé par** une commutation électrique et une seconde photodiode (22).

**10.** Dispositif de télémétrie à l'aide d'un laser à semi-conducteur selon l'une des revendications 8 ou 9, **caractérisé en ce que** le calculateur de commande (224) effectue la commutation en mode de tarage, automatiquement lors de chaque mesure.

**11.** Dispositif de télémétrie à l'aide d'un laser à semi-conducteur selon l'une des revendications 8 à 10, **caractérisé en ce que** l'on effectue la mesure de phase dans la phase de tarage par une transformation de Fourier discrète dans le calculateur de commande (224).

**12.** Dispositif de télémétrie à l'aide d'un laser à semi-conducteur selon l'une des revendications 8 à 11, **caractérisé en ce que** dans le calculateur de commande (224) on retranche la valeur de la phase mesurée dans la phase de tarage de la valeur de phase déterminée lors de la mesure.

**13.** Dispositif de télémétrie à l'aide d'un laser à semi-conducteur selon l'une des revendications précédentes, **caractérisé en ce que** l'objectif de réception est une lentille de Fresnel (15) en particulier en matière plastique et cette lentille de Fresnel (15) comporte un mince tube (24) non transparent à l'extérieur de l'axe optique (14) de l'objectif de réception, et à travers lequel sort le faisceau de rayon de mesure collimaté (12).

EP 1 051 640 B1

FIG. 1

12

FIG. 2

FIG. 3